# EUROPEAN PATENT APPLICATION

(11) **EP 4 434 336 A1**
(43) Date of publication of application: **25.09.2024**
(21) Application number: 24152036.0
(22) Date of filing: 16.01.2024
(51) Int. Cl.: A01K 89/01

(54) **FISHING SPINNING REEL**

(30) Priority: 23.03.2023 JP 2023046668
(71) Applicant: Globeride, Inc., Higashikurume-shi, Tokyo 203-8511 (JP)
(72) Inventor: TSUTSUMI, Wataru, Higashikurume-shi, 203-8511 (JP); UENO, Hayato, Higashikurume-shi, 203-8511 (JP)
(74) Representative: Boult Wade Tennant LLP

(57) **Abstract**

A fishing spinning reel comprises a bail support member attached to a support arm of a rotor, and supporting a bail; a line roller supported by the bail support member, and guiding a fishing line to a spool around which the fishing line is wound and held; and a line slider supporting one end of the bail, and guiding the fishing line picked up by the bail to the line roller. An insertion hole into which the one end of the bail is inserted is formed on a side surface of the line slider. An opening edge portion of the insertion hole comprises a surface substantially orthogonal to an axis of the insertion hole.

## Description

### BACKGROUND OF THE INVENTION

### 1. TECHNICAL FIELD

The present invention relates to a fishing spinning reel.

### 2. DESCRIPTION OF THE RELATED ART

In the related art, a fishing spinning reel in which a step of a connecting portion between a bail and a line slider is made smooth has been known (for example, refer to JP 2002-223672 A).

A fishing spinning reel of JP 2002-223672 A includes a line slider having a substantially triangular pyramid shape, and one end of a bail is inserted and fixed to an insertion hole provided at a top portion of the line slider. Accordingly, in the fishing spinning reel of JP 2002-223672 A, the bail is smoothly connected along a ridge line of the line slider.

### RELEVANT REFERENCES

### LIST OF RELEVANT PATENT LITERATURE

Patent Literature 1: Japanese Application Publication No. 2002-223672

### SUMMARY OF THE INVENTION

However, in the fishing spinning reel of JP 2002-223672 A, since the insertion hole is provided at the top portion of the line slider, the cross section of an edge portion of the insertion hole has an acute angle. In addition, an inner diameter of the insertion hole is formed to be larger than an outer diameter of the bail, and there is a gap between the insertion hole and the bail. For this reason, the gap between the insertion hole and the bail widens with an increase in the number of times of use, which is a risk. Therefore, in the fishing spinning reel of JP 2002-223672 A, when a fishing line picked by the bail is guided to the line slider, a phenomenon where the fishing line enters the insertion hole or damage to the fishing line due to the fishing line being caught between the insertion hole and the bail occurs, which is a risk.

The present invention has been made to solve such problems, and an object of the present invention is to provide a fishing spinning reel capable of preventing a fishing line from entering an insertion hole of a line slider and suitably preventing damage to the fishing line due to the fishing line being caught between a bail and the insertion hole in a configuration in which the bail is fixed to the insertion hole.

In order to solve the above-described problems, a fishing spinning reel according to the present invention comprises a rotor rotated by a winding operation of a handle; a bail support member attached to a support arm of the rotor, and supporting a bail; a line roller supported by the bail support member, and guiding a fishing line to a spool around which the fishing line is wound and held; and a line slider supporting one end of the bail, and guiding the fishing line picked up by the bail to the line roller. An insertion hole into which the one end of the bail is inserted is formed on a side surface of the line slider. An opening edge portion of the insertion hole comprises a surface substantially orthogonal to an axis of the insertion hole.

In the fishing spinning reel, when the fishing line picked up by the bail is guided to the line slider along the bail, even if the fishing line is guided toward the insertion hole that is a connecting portion for the bail, the opening edge portion receives the fishing line using the surface thereof. Accordingly, the fishing line can be prevented from entering the insertion hole, and damage to the fishing line due to the fishing line being caught between the bail and the insertion hole can be suitably prevented. In addition, the fishing line can be smoothly guided from the bail to the line slider.

In addition, it is preferable that the one end of the bail is bent at a substantially right angle toward the side surface of the line slider.

In this configuration, when the fishing line picked up by the bail is guided to the line slider along the bail, the fishing line is less likely to be guided toward the insertion hole located in a direction substantially perpendicular to a direction in which the fishing line is guided. Therefore, the entry of the fishing line into the insertion hole and the catching of the fishing line between the bail and the insertion hole can be prevented beforehand.

In addition, it is preferable that the insertion hole has an inner diameter larger than an outer diameter of the one end of the bail.

In this configuration, a gap can be formed between the bail and the insertion hole, and when the bail is rotated between a fishing line winding position and a fishing line release position, contact between the bail and the insertion hole due to vibration or the like can be suitably prevented. Therefore, deformation or damage due to contact between the bail and the insertion hole can be prevented beforehand. This contributes to preventing damage to the fishing line. In addition, since the inner diameter of the insertion hole is larger than the outer diameter of the bail, the degree of freedom of the one end of the bail when being inserted into the insertion hole is increased, so that assemblability can be improved.

In addition, it is preferable that the fishing spinning reel further comprises an attachment portion provided at the one end of the bail, and disposed in the line slider through the insertion hole; and a fixing screw for fixing the line slider to the bail support member, and that the attachment portion is fixed to the line slider by tightening the fixing screw from a line slider side.

In this configuration, when the line slider is fixed to the bail support member by the fixing screw, the bail can be fixed together, so that assemblability is excellent. In addition, since welding or bonding is not required when the bail is fixed, the cost can be reduced. In addition, since the fixing screw can be screwed from the line slider side, it is not necessary to provide a screw hole on an outer surface side of the bail support member. Accordingly, in the event of line entanglement of the fishing line, even when the fishing line moves on the outer surface side of the bail support member, damage to the fishing line due to contact with the screw hole does not occur.

According to the fishing spinning reel of the present invention, it is possible to prevent the fishing line from entering the insertion hole of the line slider and suitably prevent damage to the fishing line due to the fishing line being caught between the bail and the insertion hole in a configuration in which the bail is fixed to the insertion hole.

### BRIEF DESCRIPTION OF THE DRAWINGS

FIG. 1 is a side view illustrating an overall configuration of a fishing spinning reel according to one embodiment of the present invention;
FIG. 2 is a perspective view in which the same one bail support member, a line roller, and a line slider are disassembled and arranged side by side;
FIG. 3 is an enlarged perspective view illustrating the same slider and one end of a bail;
FIGS. 4A to 4D are enlarged views illustrating the same line slider, FIG. 4A is a plan view, FIG. 4B is a front view of FIG. 4A, FIG. 4C is a side view of FIG. 4A, and FIG. 4D is a cross-sectional view taken along line IV-IV in FIG. 4A;
FIG. 5 is an enlarged perspective view illustrating an extending angle of the one end of the bail with respect to the same line slider; and
FIG. 6 is an explanatory view for explaining a bending angle of the one end of the same bail.

### DETAILED DESCRIPTION

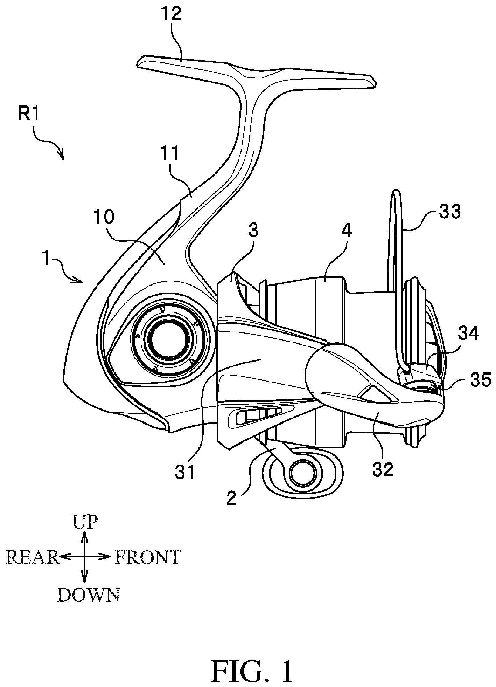

A fishing spinning reel according to an embodiment will be described with reference to the drawings. In the following description, "front and rear" and "up and down" referred to are defined based on directions illustrated in FIG. 1.

A fishing spinning reel R1 of the present embodiment comprises a reel body 1 to which a handle 2 is attached; a rotor 3 provided on the front side of the reel body 1 and rotated by a winding operation of the handle 2; and a spool 4 provided on the front side of the rotor 3 and reciprocated in a front-rear direction by a winding operation of the handle 2.

The reel body 1 comprises a body 10 and a leg portion 11 comprising a rod attachment portion 12, which extends upward from an upper portion of the body 10 to be mounted to a fishing rod, at a distal end. The body 10 comprises a body front portion having a tubular shape through which a drive shaft tube and a spool shaft (not illustrated) penetrate. The rotor 3 is attached to a front end of the drive shaft tube to cover the body front portion, and the spool 4 is attached to a front end of the spool shaft to cover a cylindrical portion (not illustrated) of the rotor 3.

A drive gear (not illustrated) that rotates around a handle shaft when the handle 2 is operated to rotate and a pinion gear (not illustrated) externally fitted to the drive shaft tube to mesh with the drive gear are provided inside the body 10. In addition, an oscillating mechanism driven by a drive gear attached to the handle shaft is connected to a rear portion of the spool shaft. Accordingly, when the drive gear is rotated by a rotational operation of the handle 2, the spool shaft and the spool 4 move forward and rearward, and a fishing line is wound around the spool 4 in a parallel and even manner.

The rotor 3 comprises a support arm 31 and a bail support member 32 rotatably attached to a front portion of the support arm 31. A pair of the support arms 31 and a pair of the bail support members 32 are each formed at an interval of substantially 180 degrees with respect to the cylindrical portion of the rotor 3, and are rotated around the spool 4 by the rotation of the rotor 3. In the fishing spinning reel R1 illustrated in FIG. 1, the support arm 31 and the bail support member 32 are located at the center in an up-down direction on one side that is one side of the reel body 1. In the pair of support arms 31 and the pair of bail support members 32, the support arm 31 and the bail support member 32 on the one side illustrated in FIG. 1 are referred to as one support arm 31 and one bail support member 32, and although not illustrated, the support arm 31 and the bail support member 32 on the other side opposite to the one side are referred to as the other support arm 31 and the other bail support member 32. In addition, when both support arms and both bail support members are referred to, the support arms and the bail support members are referred to as dual support arms 31 and 31 and dual bail support members 32 and 32.

The one support arm 31 extends forward from the cylindrical portion of the rotor 3, and supports the one bail support member 32. In addition, similarly, the other support arm 31 also extends forward from the cylindrical portion of the rotor 3, and supports the other bail support member 32. The dual bail support members 32 and 32 are supported to be rotatable between a fishing line winding position and a fishing line release position with respect to the dual support arms 31 and 31. FIG. 1 illustrates a state where the dual bail support members 32 and 32 are at the fishing line winding position.

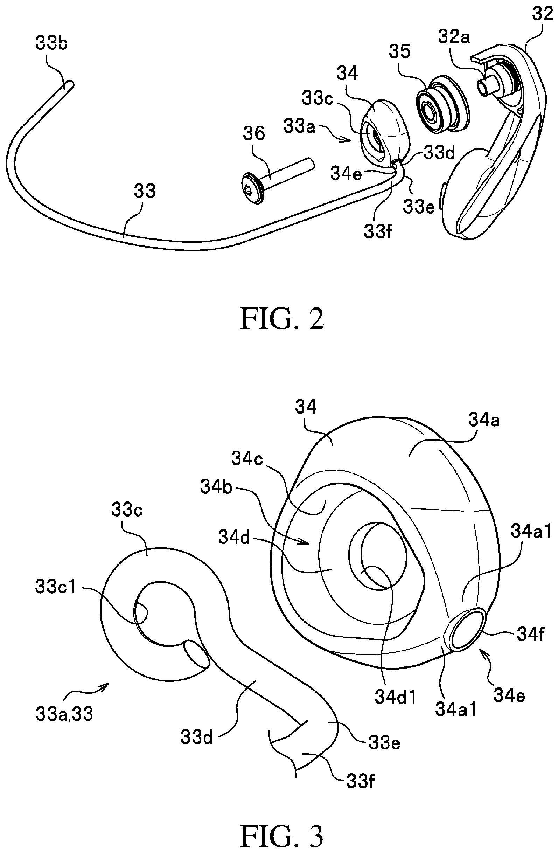

The dual bail support members 32 and 32 are members that support a bail 33 for picking up the fishing line. As illustrated in FIGS. 1 and 3, a line slider 34 that supports one end 33a of the bail 33 is attached to the one bail support member 32. In addition, a line roller 35 is rotatably supported between the one bail support member 32 and the line slider 34. The other bail support member 32 directly supports the other end 33b (refer to FIG. 2) of the bail 33.

As illustrated in FIG. 2, the bail 33 is a wire-shaped member that is curvedly formed in a substantially semi-circular shape. As illustrated in FIG. 3, the one end 33a of the bail 33 has a shape that is bent at substantially 90 degrees (substantially right angle) toward the line slider 34, and comprises an attachment portion 33c, a straight portion 33d, a bent portion 33e, and an extending portion 33f.

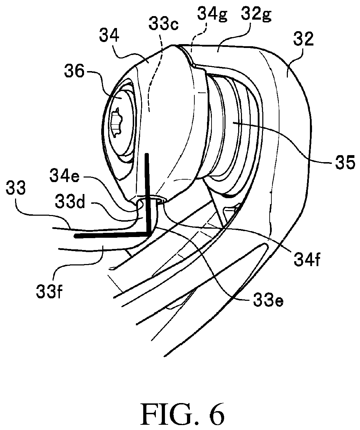

The attachment portion 33c is a portion attached to the line slider 34, and has a loop shape. An insertion hole 33c1 into which a fixing screw 36 (refer to FIG. 2) is inserted is formed on an inner side of the attachment portion 33c. As illustrated in FIGS. 2 and 6, the fixing screw 36 is a fixing member for attaching the line slider 34 to the one bail support member 32. As illustrated in FIG. 2, the fixing screw 36 is inserted from a line slider 34 side to which the one end 33a of the bail 33 is mounted, and is screwed to a cylindrical support shaft 32a of the one bail support member 32 in a state where the line roller 35 is disposed between the line slider 34 and the one bail support member 32. The line roller 35 is rotatably supported by the cylindrical support shaft 32a in a state where the fixing screw 36 is tightened. The fishing line picked up by the bail 33 is guided to the line roller 35 via the line slider 34. The shape of the attachment portion 33c is not limited to having a loop shape, and may be any shape such as a C shape or a curved shape as long as the attachment portion 33c is fixed by the fixing screw 36.

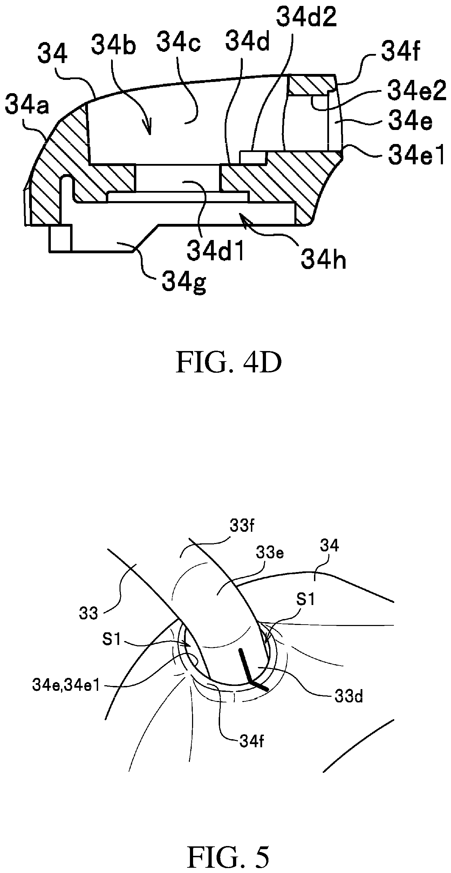

The straight portion 33d of the bail 33 is a straight portion that is formed to be continuous with the attachment portion 33c, and as illustrated in FIG. 2, is inserted into an insertion hole 34e of the line slider 34 which will be described later. As illustrated in FIG. 5, the straight portion 33d extends at substantially 90 degrees (substantially right angle) with respect to an opening edge portion 34f of the insertion hole 34e which will be described later in a state where the attachment portion 33c is attached to the line slider 34.

The bent portion 33e is a portion that is bent in an arc shape and that is formed to be continuous with the straight portion 33d, and as illustrated in FIGS. 2 and 3, is bent in a direction toward the other end 33b of the bail 33 at a bending angle of substantially 90 degrees (substantially right angle) with respect to the straight portion 33d. The extending portion 33f is a substantially straight portion that is formed to be continuous with the bent portion 33e. As illustrated in FIG. 6, the extending portion 33f is disposed in a substantially perpendicular positional relationship with the straight portion 33d.

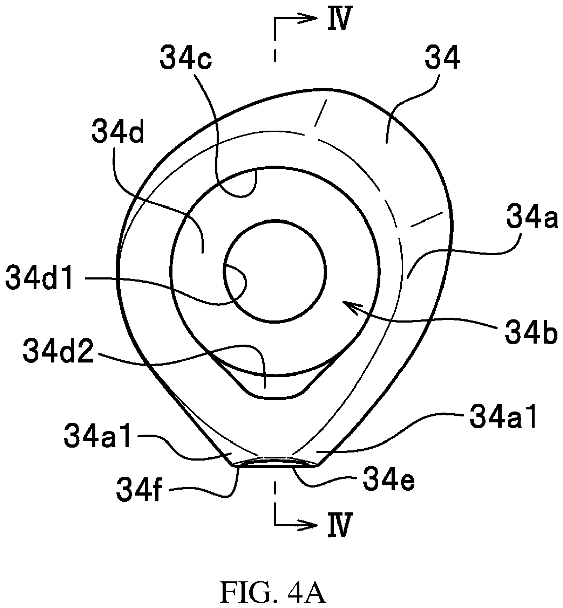

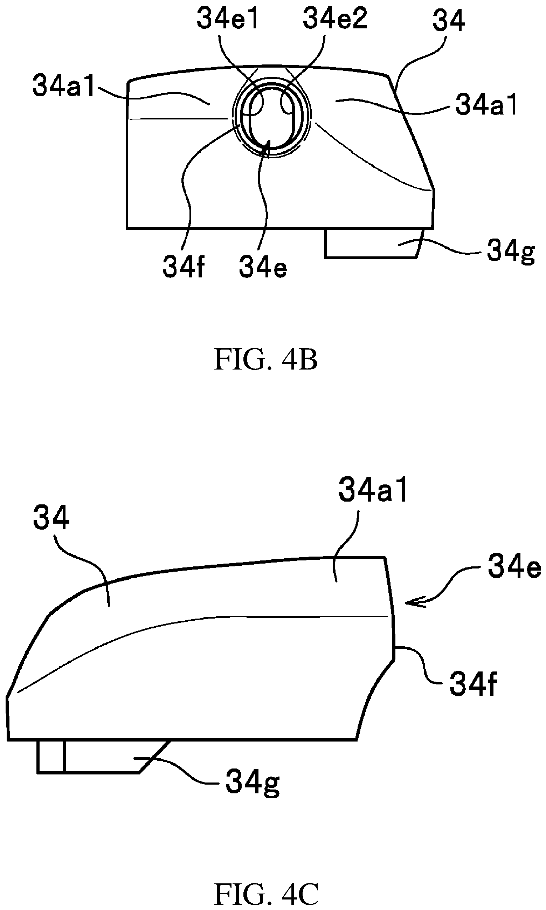

As illustrated in FIG. 4A, the line slider 34 has a substantially cam outer shape in a plan view. As illustrated in FIG. 2, the line slider 34 supports the one end 33a of the bail 33, and supports an end of the line roller 35. As illustrated in FIGS. 4A and 4D, the line slider 34 has a bottomed tubular shape comprising a peripheral wall portion 34a and a bottom portion 34d having a substantially circular shape in a plan view. As illustrated in FIG. 4A, a side surface (outer peripheral surface) of the peripheral wall portion 34a comprises inclined surfaces 34a1 and 34a1 that are tapered while being somewhat curved toward the front side. Furthermore, the insertion hole 34e into which the one end 33a of the bail 33 is inserted is formed at distal ends of the inclined surfaces 34a1 and 34a1 (refer to FIG. 4B). Details of the insertion hole 34e will be described later.

As illustrated in FIGS. 4A and 4D, an accommodation portion 34b surrounded by an inner surface 34c of the peripheral wall portion 34a and the bottom portion 34d is formed inside the peripheral wall portion 34a. The accommodation portion 34b functions as an accommodation recess that accommodates the attachment portion 33c of the bail 33 and a part of the head of the fixing screw 36 (refer to FIG. 6). A screw insertion hole 34d1 having a circular shape in a plan view is formed open at a central portion of the bottom portion 34d. The screw insertion hole 34d1 is formed to a size that allows the fixing screw 36 to be inserted therethrough. In addition, the bottom portion 34d is formed to be one step lower than a protruding portion 34d2 that is continuous with the insertion hole 34e.

As illustrated in FIG. 4B, the insertion hole 34e is formed at a central portion in a width direction in a front view. The insertion hole 34e has a substantially circular cross section. The insertion hole 34e is formed to be continuous with the inclined surfaces 34a1 and 34a1. A minimum inner diameter of an opening 34e1 of the insertion hole 34e is set to be larger than an outer diameter of the straight portion 33d (refer to FIG. 3) of the bail 33. Namely, in a state where the straight portion 33d of the bail 33 is inserted into the opening 34e1, as illustrated in FIG. 5, a gap S1 is formed between an inner edge of the opening 34e1 and an outer surface of the straight portion 33d. In other words, the insertion hole 34e has an inner diameter (minimum inner diameter) larger than the outer diameter of the straight portion 33d of the bail 33. The size of the gap S1 is set to such a size that the straight portion 33d of the bail 33 and the insertion hole 34e do not come into contact with each other when the bail 33 is rotated between a fishing line winding position and a fishing line release position. The minimum inner diameter of a part of the opening 34e1 may be set to such a size that the straight portion 33d (refer to FIG. 3) can be inserted thereinto, thereby forming the gap S1 between an inner surface of the other portion of the opening 34e1 and the outer surface of the straight portion 33d of the bail 33.

The opening edge portion 34f of the insertion hole 34e comprises a surface substantially orthogonal to an axis of the insertion hole 34e (axis of the straight portion 33d of the bail 33). In the present embodiment, substantially the entirety of the opening edge portion 34f is formed as a flat surface. The surface substantially orthogonal to the axis of the insertion hole 34e may be gently curved. In addition, the opening edge portion 34f is illustrated to be continuous over the entirety of a periphery of the insertion hole 34e, but is not limited thereto, and may be provided at a part of the periphery of the insertion hole 34e.

As illustrated in FIG. 4B, an inner surface 34e2 having a cross-sectional shape smaller than the cross-sectional shape of the opening 34e1 is formed on a back side of the opening 34e1 of the insertion hole 34e. The cross-sectional shape of the inner surface 34e2 is a substantially oval shape (oblong hole shape) in a front view. The size of a lateral width of the inner surface 34e2 is set to be equal to the size of the outer diameter of the straight portion 33d (refer to FIG. 3) of the bail 33. In addition, the size of a longitudinal width of the inner surface 34e2 is set to be larger than the size of the outer diameter of the straight portion 33d (refer to FIG. 3) of the bail 33. In addition, curved surfaces on the upper side and the lower side of the inner surface 34e2 have an arc shape corresponding to the arc shape of the outer surface of the straight portion 33d (refer to FIG. 3) of the bail 33. Accordingly, the straight portion 33d of the bail 33 is disposed to have a gap portion between the straight portion 33d and at least one of the curved surfaces on the upper side and the lower side of the inner surface 34e2. The gap portion functions as a relief portion for securing the degree of freedom of movement of the one end 33a when the one end 33a of the bail 33 is assembled to the line slider 34. In addition, after assembly, the gap portion functions as a space for avoiding contact with the inner surface 34e2 due to vibration or the like of the bail 33.

As illustrated in FIG. 4D, a recess 34h that accommodates an end of the line roller 35 (refer to FIG. 2) is formed on a lower surface of the line slider 34. In addition, a protruding wall 34g protruding opposite to the accommodation portion 34b is formed on a peripheral wall surrounding the recess 34h. As illustrated in FIG. 6, the protruding wall 34g functions as a receiving portion that receives a distal end of a fishing line guiding portion 32g provided in the one bail support member 32.

Next, a procedure for attaching the one end 33a of the bail 33 to the line slider 34 will be described. First, the other end 33b of the bail 33 is inserted into the accommodation portion 34b of the line slider 34, and the other end 33b is inserted into the insertion hole 34e from an accommodation portion 34b side. Then, the bail 33 is sequentially passed through the insertion hole 34e, and finally the one end 33a of the bail 33 is passed through the insertion hole 34e.

At this time, the size of the longitudinal width of the inner surface 34e2 of the insertion hole 34e is set to be larger than the size of the outer diameter of the straight portion 33d of the bail 33, and the minimum inner diameter of the opening 34e1 of the insertion hole 34e is larger than the outer diameter of the straight portion 33d of the bail 33. Accordingly, the degree of freedom of movement of the one end 33a of the bail 33 in the hole when passing through the insertion hole 34e is increased, so that the bent portion 33e of the bail 33 can also be smoothly passed therethrough.

Thereafter, as illustrated in FIG. 2, the line roller 35 is disposed between the line slider 34 and the one bail support member 32, and the fixing screw 36 is passed through the attachment portion 33c of the bail 33 and the line slider 34 from the line slider 34 side, and is screwed and tightened to the cylindrical support shaft 32a of the one bail support member 32 by which the line roller 35 is supported. Accordingly, the one end 33a of the bail 33, the line slider 34, and the line roller 35 can be collectively attached to the one bail support member 32.

When the attachment portion 33c of the bail 33 has a substantially C shape, a substantially curved shape, or the like, an end of the attachment portion 33c may be directly inserted and attached to the insertion hole 34e from the front side of the line slider 34.

According to the fishing spinning reel R1 of the present embodiment described above, when the fishing line picked up by the bail 33 is guided to the line slider 34 along the bail 33, even if the fishing line is guided toward the insertion hole 34e that is a connecting portion for the bail 33, the opening edge portion 34f receives the fishing line using the surface thereof. Accordingly, the fishing line can be prevented from entering the insertion hole 34e, and damage to the fishing line due to the fishing line being caught between the straight portion 33d of the bail 33 and the insertion hole 34e can be suitably prevented. In addition, the fishing line can be smoothly guided from the bail 33 to the line slider 34.

In addition, since the one end 33a of the bail 33 is bent at a substantially right angle toward the peripheral wall portion 34a of the line slider 34, when the fishing line picked up by the bail 33 is guided to the line slider 34 along the bail 33, the fishing line is less likely to be guided toward the insertion hole 34e located in a direction substantially perpendicular to a direction in which the fishing line is guided. Therefore, the entry of the fishing line into the insertion hole 34e and the catching of the fishing line between the straight portion 33d of the bail 33 and the insertion hole 34e can be prevented beforehand.

In addition, since the gap S1 is formed between the straight portion 33d of the bail 33 and the insertion hole 34e, when the bail 33 is rotated between the fishing line winding position and the fishing line release position, contact between the straight portion 33d of the bail 33 and the insertion hole 34e due to vibration or the like can be suitably prevented. Therefore, deformation or damage due to contact between the straight portion 33d of the bail 33 and the insertion hole 34e can be prevented beforehand. This contributes to preventing damage to the fishing line. In addition, since the inner diameter of the insertion hole 34e is larger than the outer diameter of the straight portion 33d of the bail 33, the degree of freedom of the one end 33a of the bail 33 when being inserted into the insertion hole 34e is increased, so that assemblability can be improved.

In addition, when the line slider 34 is fixed to the one bail support member 32 by the fixing screw 36, the one end 33a of the bail 33 can be fixed together, so that assemblability is excellent. In addition, since welding or bonding is not required when the one end 33a of the bail 33 is fixed, the cost can be reduced. In addition, since the fixing screw 36 can be screwed from the line slider 34 side, it is not necessary to provide a screw hole on an outer surface side of the one bail support member 32, and the fixing screw 36 is not exposed on the outer surface side of the one bail support member 32. Accordingly, in the event of line entanglement of the fishing line, even when the fishing line moves on the outer surface side of the one bail support member 32, damage to the fishing line due to contact with the screw hole does not occur. In addition, since at least a part of the fixing screw 36 is accommodated in the accommodation portion 34b of the line slider 34, the fishing line is also less likely to become entangled with the head of the fixing screw 36 on the line slider 34 side.

The embodiment of the present invention has been described above; however, the present invention is not limited to the example described in the embodiment. For example, in the embodiment, the insertion hole 34e having a substantially circular cross section has been described; however, the present invention is not limited thereto, and various shapes such as a substantially oval cross section can be adopted.

In addition, the line slider 34 having a substantially cam outer shape in a plan view has been described; however, the present invention is not limited thereto, and various shapes can be adopted as long as the insertion hole 34e is formed on the side surface.

In addition, the entirety of the opening edge portion 34f of the insertion hole 34e is a surface substantially orthogonal to the axis of the insertion hole; however, the present invention is not limited thereto, and the opening edge portion 34f may be provided at a portion with which the fishing line has a possibility of coming into contact when the fishing line picked up by the bail 33 is guided to the line slider 34 along the bail 33.

In addition, the fixing screw 36 is used as a member that fixes the line slider 34 to the bail support member 32, but is not limited thereto, and a configuration in which fixing is performed by a pin member fixed by press-fitting, bonding, or the like may be adopted.

### Reference Signs List

- 1: Reel body
- 2: Handle
- 3: Rotor
- 4: Spool
- 31: Support arm
- 32: Bail support member
- 33: Bail
- 33a: One end
- 33c: Attachment portion
- 34: Line slider
- 34e: Insertion hole
- 34f: Opening edge portion
- 36: Fixing screw
- 35: Line roller
- R1: Fishing spinning reel

## Claims

1. A fishing spinning reel comprising: a rotor rotated by a winding operation of a handle; a bail support member attached to a support arm of the rotor, and supporting a bail; a line roller supported by the bail support member, and guiding a fishing line to a spool around which the fishing line is wound and held; and a line slider supporting one end of the bail, and guiding the fishing line picked up by the bail to the line roller,
wherein an insertion hole into which the one end of the bail is inserted is formed on a side surface of the line slider, and
an opening edge portion of the insertion hole comprises a surface substantially orthogonal to an axis of the insertion hole.

2. The fishing spinning reel according to claim 1, wherein the one end of the bail is bent at a substantially right angle toward the side surface of the line slider.

3. The fishing spinning reel according to claim 1, wherein the insertion hole has an inner diameter larger than an outer diameter of the one end of the bail.

4. The fishing spinning reel according to claim 1, further comprising:
an attachment portion provided at the one end of the bail, and disposed in the line slider through the insertion hole; and
a fixing screw for fixing the line slider to the bail support member,
wherein the attachment portion is fixed to the line slider by tightening the fixing screw from a line slider side.
